# EUROPEAN PATENT APPLICATION

(11) **EP 1 195 701 A1**
(43) Date of publication of application: **10.04.2002**
(21) Application number: 01122647.9
(22) Date of filing: 27.09.2001
(51) Int. Cl.: G06F 17/60, H04Q 7/22, G09F 27/00

(54) **Method for sending advertisements directly to users**

(30) Priority: 03.10.2000 IT MI002141
(71) Applicant: Gestweb S.p.A., 25124 Brescia (IT)
(72) Inventor: Vinati, Felice, 25069 Villa Carcina (Brescia) (IT); Vinati, Samule, 25123 Brescia (IT)
(74) Representative: Modiano, Guido, Dr.-Ing.

(57) **Abstract**

A method for sending advertisements directly to users, comprising the step of:
radio broadcasting advertisements adapted to be received by mobile terminals owned by users and adapted to be displayed on displays of the mobile terminals.

## Description

The present invention relates to a method for sending advertisements directly to users. More particularly, the invention relates to a method for sending advertisements to users wherever they may be and at any time of the day.

It is known that sending advertisements related to a specific product is one of the most widespread and most assuredly effective weapons for increasing the sales of a company.

It is therefore evident that advertisers are always searching for new spaces where they can send advertisements or in any case show adverts to users.

In addition to ordinary television advertising slots, inserted during television broadcasts that the user can be interested in viewing, and in addition to ordinary billboards placed on city walls or along high-traffic roads, it is therefore necessary to find new advertising spaces that can be used at low cost by advertisers without unduly interfering with the normal activities of a user.

The aim of the present invention is to provide a method for sending advertisements directly to users that allows to transmit such advertisements during periods that would anyway be idle for the user and by way of a means that can be easily carried by the user.

Within this aim, an object of the present invention is to provide a method for sending advertisements directly to users that allows to send advertisements by way of a means that the user normally carries with him for other purposes.

Another object of the present invention is to provide a method for sending advertisements directly to users that allows to broadcast such advertisements fully in unencrypted form and so that they can be received freely by any user provided with a suitable receiving means.

Another object of the present invention is to provide a device for receiving advertisements broadcast to users that allows to combine this characteristic with conventional features present in devices currently used by users for other functions.

Another object of the present invention is to provide a method for sending advertisements directly to users that is highly reliable, relatively simple to provide and at competitive costs.

This aim and these and other objects that will become better apparent hereinafter are achieved by a method for sending advertisements directly to users, characterized in that it comprises the step of:
radio broadcasting advertisements adapted to be received by mobile terminals owned by users and adapted to be displayed on displays of said mobile terminals.

Further characteristics and advantages of the invention will become better apparent from the following detailed description of preferred but not exclusive embodiments of the method according to the invention, illustrated only by way of non-limitative example in the accompanying drawings, wherein:
Figure 1 is a schematic view of a mobile telephone terminal that can be used for the method according to the present invention; and
Figure 2 is a block diagram of the method according to the invention.

With reference to the figures, the method according to the invention is as follows.

The method provides for the radio broadcasting of advertisements and/or adverts and/or banners, of the audio or visual and/or audiovisual and/or graphic type, directly on the display or monitor of a cellular mobile telephone or satellite telephone or pager or multimedia terminal that also acts as a mobile telephone.

Substantially, the method according to the invention entails the radio broadcasting of advertisements suitable to reach mobile multimedia terminals owned by users who may be located anywhere.

Substantially, the user must be equipped with a mobile multimedia communications terminal, such as for example a cellular telephone (GSM or UMTS technology and the like) and the radio-broadcast advertisements are received by the multimedia terminal owned by the user, which is internally provided with appropriate software for receiving the advertisements and/or with appropriate hardware.

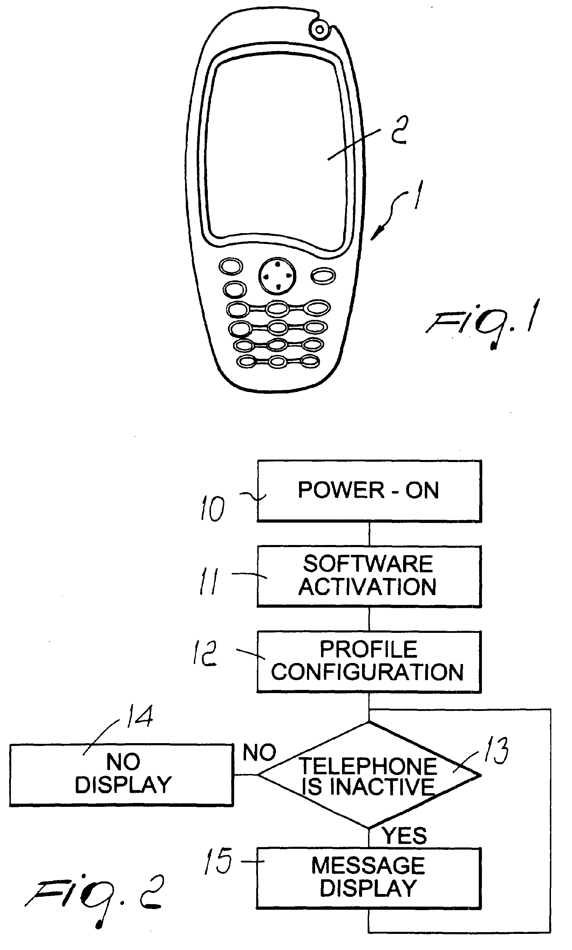

Figure 1 illustrates a cellular telephone, designated by the reference numeral 1, whose display 2 is adapted to display advertisements that scroll on the display; such advertisements can be in the form of simple data or in the form of video and audio and the like.

The advertisements are sent during periods of inactivity of the cellular telephone.

The method according to the invention is shown schematically in Figure 2, in which step 10 is the initial step for switching on the multimedia terminal, such as for example the cellular telephone 1, followed by the step 11 for activating the software contained in the multimedia terminal that allows to prepare the terminal for wireless reception of advertisements.

This is followed by an optional step 12 for configuring the user profile, so as to be able to optionally receive targeted advertisements.

At this point the method checks, step 13, whether the cellular telephone 1 is inactive or not, i.e., whether the user is pressing any of the keys of the cellular telephone.

If this check yields a negative result, i.e., if the cellular telephone is active, no advertisement is displayed, step 14.

Otherwise, step 15, the advertisements are displayed on the display of the cellular telephone 1.

The method according to the invention uses a multimedia terminal 1 that advantageously can be a cellular telephone, provided with an appropriate program adapted to receive radio-broadcast advertising signals when the cellular telephone is switched on.

In the case of new-generation cellular telephones, i.e., UMTS telephones, radio reception technology is already normally implemented and therefore the telephone would be usable immediately for application of the method according to the invention.

After a preset period of time for which the terminal 1 is not active (standby or nonuse of its phonebook, to-do list, et cetera), the method according to the invention provides for the automatic activation of the function of receiving advertisements. Such reception is deactivated automatically if the user presses any key of the telephone terminal 1.

Substantially, the invention allows to enormously expand the possibility to send advertisements by being able to utilize the displays of multimedia terminals such as indeed cellular telephones, thus reaching a considerable number of users at the same time, utilizing periods of inactivity of the terminal and therefore avoiding being a nuisance to users.

The method according to the invention therefore allows to create low-cost advertising spaces that can be easily supplied by advertisers, also by virtue of the widespread presence of multimedia terminals such as cellular telephones.

The method thus conceived is susceptible of numerous modifications and variations, all of which are within the scope of the inventive concept; all the details may further be replaced with other technically equivalent elements.

The disclosures in Italian Patent Application No. MI2000A002141 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for sending advertisements directly to users, **characterized in that** it comprises the step of:
radio broadcasting advertisements adapted to be received by mobile terminals owned by users and adapted to be displayed on displays of said mobile terminals.

2. The method according to claim 1, **characterized in that** it comprises the steps of:
switching on said mobile terminal;
activating software of said mobile terminal that is adapted to allow reception of said advertisements;
checking whether said mobile terminal is inactive or not and, if it is inactive, displaying said advertisements on said display of the mobile terminal.

3. The method according to claim 2, **characterized in that** it further comprises a step of configuring a user profile, after the activation of said software for receiving said advertisements, in order to predefine the type of advertisements that the user wishes to receive.

4. The method according to one or more of the preceding claims, **characterized in that** said mobile terminal is a cellular telephone.

5. The method according to one or more of the preceding claims, **characterized in that** said mobile terminal is a satellite cellular telephone.

6. The method according to one or more of the preceding claims, **characterized in that** said mobile terminal is a multimedia terminal.

7. A portable device for receiving advertisements, **characterized in that** it comprises at least one unit for receiving radio-broadcast messages, said receiving unit being combined with a telephone set, at least one display being adapted to display said advertisements.

8. The device according to claim 7, **characterized in that** it is a cellular telephone.

9. The device according to claim 7, **characterized in that** it is a satellite telephone.

10. The device according to claim 7, **characterized in that** it is a multimedia terminal.

11. The device according to claim 7, **characterized in that** said advertisements are audio or visual and/or audiovisual advertisements.
